# EUROPEAN PATENT APPLICATION

(11) **EP 1 099 666 A1**
(43) Date of publication of application: **16.05.2001**
(21) Application number: 00309943.9
(22) Date of filing: 09.11.2000
(51) Int. Cl.: C01B 7/07

(54) **Method for separating hydrogen chloride and water from an aqueous hydrogen chloride solution**

(30) Priority: 10.11.1999 JP 31950799
(71) Applicant: Sumitomo Chemical Company, Limited, Chuo-ku Osaka 541-8550 (JP)
(72) Inventor: Suzuta, Tetsuya, Niihama-shi, Ehime (JP); Iwanaga, Kiyoshi, Chiba-shi, Chiba (JP)
(74) Representative: Cresswell, Thomas Anthony

(57) **Abstract**

The present invention provides a method for efficiently separating hydrogen chloride and water, without adding a third component, from an aqueous hydrogen chloride solution of which separation into components is difficult due to formation of an azeotropic mixture, which method comprises the steps of:
providing a hydrogen chloride distillation column and a dehydration column; operating the distillation column under a pressure higher than the pressure of the dehydration column; feeding and distilling an aqueous hydrogen chloride solution having a composition richer in hydrogen chloride than an azeotropic composition when under a pressure equal to the pressure of the distillation column, to the distillation column; recovering hydrogen chloride from the top of the distillation column; feeding and distilling an aqueous hydrogen chloride solution having a composition richer in water than an azeotropic composition when under a pressure equal to the pressure of the dehydration column, to the dehydration column; recovering water from the top of the dehydration column; feeding a part or all of the liquid recovered from the bottom of the distillation column to the dehydration column; and feeding a part or all of the liquid recovered from the bottom of the dehydration column to the distillation column.

## Description

### BACKGROUND OF THE INVENTION

### Technical Field of the Invention

The present invention relates to a method for separating hydrogen chloride and water from an aqueous hydrogen chloride solution. More particularly, the present invention relates to a method for efficiently separating hydrogen chloride and water from an aqueous hydrogen chloride solution without adding a third component.

### Description of Related Art

It is difficult to separate an aqueous hydrogen chloride solution into constituent components, hydrogen chloride and water, solely by simple distillation because of formation of an azeotropic mixture of the components. As the method for separating hydrogen chloride and water from such an aqueous hydrogen chloride solution, a method is known in which a strong electrolyte such as sulfuric acid, calcium chloride and the like is added as a third component to an aqueous hydrogen chloride solution to change azeotropic condition thereof and the resulted mixture is distilled(JP 8-225304 A, "Soda Handbook" edited by Japanese Soda Industry Society, P358,359, 1998).

A certain specific procedure thereof is as follows: In a first step, an aqueous hydrogen chloride solution is distilled under a condition wherein activity of water in the solution is lowered by addition of a strong electrolyte, to strip a gas containing hydrogen chloride as a main component, and the gas is recovered (hydrogen chloride recovery process). In a second step, the strong electrolyte aqueous solution remained in the first step is distilled to distill off water (dehydration process). The concentrated strong electrolyte aqueous solution can be recycled as an additive in the hydrogen chloride recovery process. However, this method has problems that a third component has to be used and expensive apparatus materials are necessary. For example, in the case of use of sulfuric acid as a third component, though it is desirable that the concentration of sulfuric acid added in the hydrogen chloride recovery process is at least 80% by weight or more so that sufficient effect to change azeotropic condition is obtained and the flow rate of sulfuric acid being returned to the hydrogen chloride recovery process after concentrated in the dehydration process is not excess, it is difficult to use a cheap material such as resin-impregnated carbon frequently used in distillation of an aqueous hydrogen chloride solution since when sulfuric acid having such concentration is added, hydrogen chloride, water and sulfuric acid are present simultaneously in distillation in the hydrogen chloride recovery process and the boiling point of the liquid also increases. The dehydration process is usually conducted under reduced pressure since the operation temperature reaches high temperatures of 200°C or more under atmospheric pressure, while, decrease in operation temperature in the dehydration process is limited since condensation of distilled water is difficult when the operation pressure is lowered excessively. Due to this fact, it is usually necessary to use an expensive corrosion-resistant material such as tantalum and the like in an apparatus in the dehydration process. Further, when calcium chloride is added as a third component, scaling may sometimes occur in the dehydration process due to deposition of solid.

### SUMMARY OF THE INVENTION

Accordingly, it is an object of the present invention to provide a method for efficiently separating hydrogen chloride and water from an aqueous hydrogen chloride solution of which separation of components is difficult due to formation of an azeotropic mixture of the components, the method being conducted without adding a third component.

The present inventors have intensively studied on a method for separating hydrogen chloride and water from an aqueous hydrogen chloride solution. As a result, they have found that hydrogen chloride and water were effectively separated from an aqueous hydrogen chloride solution without adding a third component by distilling an aqueous hydrogen chloride solution under the specific condition of the pressure of distillation columns and the concentration of aqueous hydrogen chloride solutions fed to the distillation columns.

That is, the present invention provides a method for separating hydrogen chloride and water from an aqueous hydrogen chloride solution comprising the steps of:
providing a hydrogen chloride distillation column and a dehydration column;
operating the hydrogen chloride distillation column under a pressure of a top of the hydrogen chloride distillation column higher than a pressure of a top of the dehydration column;
feeding an aqueous hydrogen chloride solution having a composition richer in hydrogen chloride than an azeotropic composition of hydrogen chloride and water under the pressure of the top of the hydrogen chloride distillation column to the hydrogen chloride distillation column;
distilling the aqueous hydrogen chloride solution fed to the hydrogen chloride distillation column;
recovering hydrogen chloride from the top of the hydrogen chloride distillation column;
feeding an aqueous hydrogen chloride solution having a composition richer in water than an azeotropic composition of hydrogen chloride and water under the pressure of the top of the dehydration column to the dehydration column;
distilling the aqueous hydrogen chloride solution fed to the dehydration column;
recovering water from the top of the dehydration column;
feeding a part or all of the bottom liquid of the hydrogen chloride distillation column to the dehydration column; and
feeding a part or all of the bottom liquid of the dehydration column to the hydrogen chloride distillation column.

### BRIEF DESCRIPTION OF THE DRAWINGS

Fig. 1 is a view showing vapor-liquid equilibrium relation of hydrogen chloride and water under a constant pressure.

Fig. 2 is a view showing the relation of a boiling point to hydrogen chloride concentration.

Fig. 3 is a view showing an example of a process flow in which the present invention is applied to a method for producing chlorine by oxidizing hydrogen chloride with oxygen.

### DETAILED DESCRIPTION OF PREFERRED EMBODIMENTS

In the present invention, the hydrogen chloride distillation column is operated under a pressure higher than the pressure of a dehydration column. An aqueous hydrogen chloride solution having a composition richer in hydrogen chloride than an azeotropic composition of hydrogen chloride and water under the pressure of the hydrogen chloride distillation column is fed to hydrogen chloride distillation column and distilled. Hydrogen chloride is recovered from the top of the hydrogen chloride distillation column, and a part or all of the bottom liquid of the distillation column is fed to a dehydration column.

The pressure(indicating the pressure of the top of the hydrogen chloride distillation column, hereafter, the same) of the hydrogen chloride distillation column is set higher than the pressure(indicating the pressure of the top of the dehydration column, hereafter, the same) of the dehydration column, and usually from about 1×10⁵ to about 5×10⁵ Pa(about 1 to about 5 bar). The temperature (indicating the temperature of the bottom liquid of the hydrogen chloride distillation column, hereafter, the same) of the hydrogen chloride distillation column is determined depending on the operation pressure and the composition of an aqueous hydrogen chloride solution to be distilled, and usually from about 100 to about 160°C. The form of the hydrogen chloride distillation column is not particularly restricted, and a packed column and plate column are exemplified. Apparatus materials of the distillation column and appended instruments such as a reboiler and the like may advantageously be those having corrosion resistance against an aqueous hydrogen chloride solution under the operation condition, and there are exemplified resin-impregnated carbon, fluorinated ethylene resins, metals of which inner surfaces are lined or coated with a fluorinated ethylene resin, and the like.

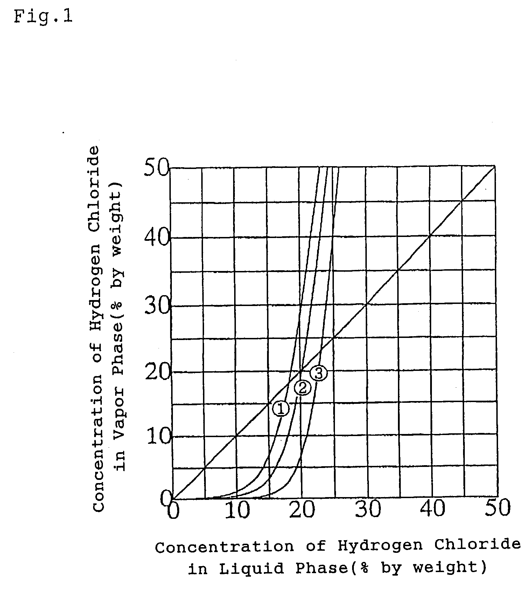

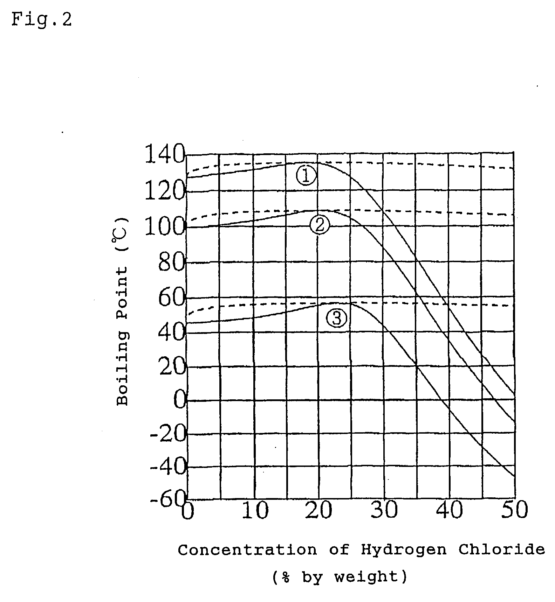

Vapor-liquid equilibrium relation of hydrogen chloride and water and the relation of a boiling point to hydrogen chloride concentration under a constant pressure are shown in Figs. 1 and 2. In Figs. 1 and 2, ① is a line indicated the relation at the pressure of 2.5×10⁵ Pa(2.5 bar), ② is a line indicated the relation at the pressure of 1.0×10⁵ Pa(1.0 bar), and ③ is a line indicated the relation at the pressure of 0.1×10⁵ Pa(0.1 bar). In Fig.2, solid lines are indicated the relation in a liquid phase, and dotted lines are indicated the relation in a vapor phase.

Regarding the composition of hydrogen chloride and water of the aqueous hydrogen chloride solution fed to the hydrogen chloride distillation column, it is usual that the amount of hydrogen chloride is about 25 to about 40% by weight and the amount of water is about 60 to about 75% by weight. A gas containing hydrogen chloride as a main component in high concentration is recovered from the top of the column and this gas contains a slight amount of water, and water content of this gas can be further reduced by a reflux operation in which a gas from the top of the column is cooled and condensed to give an aqueous hydrogen chloride solution which is returned to the hydrogen chloride distillation column.

It is preferable that an aqueous hydrogen chloride solution discharged from the bottom of the hydrogen chloride distillation column is an aqueous hydrogen chloride solution having a composition richer in water than an azeotropic composition of hydrogen chloride and water under the pressure of the dehydration column, but it is not restricted.

The dehydration column is operated under a pressure lower than the pressure of the above-described hydrogen chloride distillation column. An aqueous hydrogen chloride solution having a composition richer in water than an azeotropic composition of hydrogen chloride and water under the pressure of the dehydration column is fed to the dehydration column, and distilled. Water is recovered from the top of the dehydration column, and a part or all of the bottom liquid of the dehydration column is fed to the above-described hydrogen chloride distillation column.

The pressure of the dehydration column is set lower than the operation pressure of the hydrogen chloride distillation column, and usually from about 0.05×10⁵ to about 0.5×10⁵ Pa(about 0.05 to about 0.5 bar). The temperature (indicating the temperature of the bottom liquid of the dehydration column, hereafter, the same) of the dehydration column is determined depending on the operation pressure and the composition of an aqueous hydrogen chloride solution to be distilled, and usually from about 50 to about 90°C. Since this temperature is lower than the operation temperature of the dehydration process when a strong electrolyte such as sulfuric acid and the like is added as a third component, a heating source to be used can be selected from wider range. Further, materials of instruments also are selected from wider range, and relatively cheaper materials such as a glass lined metal and the like can be used. The form of the dehydration column is not particularly restricted, and a packed column, plate column and the like are exemplified. It is desirable to use a distillation column in which a condensation part is provided at higher position than a feeding stage of an aqueous hydrogen chloride solution, condense all of a gas from the top of the column, and return a part of the condensed liquid to the top of the column, so that water can be condensed efficiently at the top side.

Regarding the composition of hydrogen chloride and water of an aqueous hydrogen chloride solution fed to the dehydration column, it is usual that the amount of hydrogen chloride is about 15 to about 21% by weight and the amount of water is about 79 to about 85% by weight.

When the aqueous hydrogen chloride solution discharged from the bottom of the dehydration column is the aqueous hydrogen chloride solution having a composition richer in water than an azeotropic composition of hydrogen chloride and water under the pressure of the dehydration column, this aqueous hydrogen chloride solution is fed to the dehydration column as it is. When the aqueous hydrogen chloride solution discharged from the bottom of the dehydration column is the aqueous hydrogen chloride solution having a composition richer in hydrogen chloride than an azeotropic composition of hydrogen chloride and water under the pressure of the dehydration column, this acid is mixed with an aqueous hydrogen chloride solution having a composition richer in water than an azeotropic composition of hydrogen chloride and water under the pressure of the dehydration column and the like so that the resulted acid solution is an aqueous hydrogen chloride solution having a composition richer in water than an azeotropic composition of hydrogen chloride and water under the pressure of the dehydration column, and the resulted acid solution is fed to the dehydration column.

It is preferable that an aqueous hydrogen chloride solution discharged from the bottom of the dehydration column is an aqueous hydrogen chloride solution having a composition richer in hydrogen chloride than an azeotropic composition of hydrogen chloride and water under the pressure of the hydrogen chloride distillation column, but it is not restricted.

When the aqueous hydrogen chloride solution discharged from the bottom of the dehydration column is the aqueous hydrogen chloride solution having a composition richer in water than an azeotropic composition of hydrogen chloride and water under the pressure of the dehydration column, this acid is mixed with an aqueous hydrogen chloride solution having a composition richer in hydrogen chloride than an azeotropic composition of hydrogen chloride and water under the pressure of the hydrogen chloride distillation column and the like so that the resulted acid solution is an aqueous hydrogen chloride solution having a composition richer in hydrogen chloride than an azeotropic composition of hydrogen chloride and water under the pressure of the hydrogen chloride distillation column, and the resulted acid solution is fed to the hydrogen chloride distillation column.

As shown in Fig. 1, at the side wherein the concentration of water is higher than an azeotropic composition of hydrogen chloride and water, relative volatility of water to hydrogen chloride is higher, and water of high concentration can be easily separated and recovered from the top of the dehydration column. Since the operation temperature of the hydrogen chloride distillation column is higher than the operation temperature of the dehydration column, the sensible heat of an aqueous hydrogen chloride solution discharged from the bottom of the hydrogen chloride distillation column can be utilized effectively for evaporation of water in the dehydration column, and it is also possible that after heat exchange with a raw aqueous hydrogen chloride solution and/or the aqueous hydrogen chloride solution fed from the dehydration column to the hydrogen chloride distillation column, the aqueous hydrogen chloride solution is fed to the dehydration column to reduce necessary heating amount from the outside of the hydrogen chloride distillation column of which operation temperature is high.

The composition of a raw material, aqueous hydrogen chloride solution subjected to the separation of the present invention is not particularly restricted, the concentration thereof is usually from about 15 to about 40% by weight, and when the composition of the raw material is richer in hydrogen chloride than an azeotropic composition of hydrogen chloride and water under the pressure of the dehydration column, the raw material is fed to the hydrogen chloride distillation column, and when the composition is richer in water than an azeotropic composition of hydrogen chloride and water under the pressure of the hydrogen chloride distillation column, the raw material is fed to the dehydration column. When the composition of the raw material is richer in hydrogen chloride than an azeotropic composition of hydrogen chloride and water under the pressure of the hydrogen chloride distillation column and at same time richer in water than an azeotropic composition of hydrogen chloride and water under the pressure of the dehydration column, the raw material may be fed to any of the column.

The aqueous hydrogen chloride solution fed to the hydrogen chloride distillation column or the dehydration column may be fed to the columns in a state of not only liquid but also gas or a mixture of gas and liquid. For example, when the pressure of the bottom liquid of the hydrogen chloride distillation column which is operated under higher pressure than the dehydration is released, at least one part of the liquid changes to gas. This gas may be fed to the dehydration column as it is.

The origin of a raw material, aqueous hydrogen chloride solution subjected to the separation of the present invention is not particularly restricted, and aqueous hydrogen chloride solutions containing all or a part of unreacted hydrogen chloride and reaction product water in a reaction mixture obtained by oxidation of hydrogen chloride with oxygen to chlorine and water are listed.

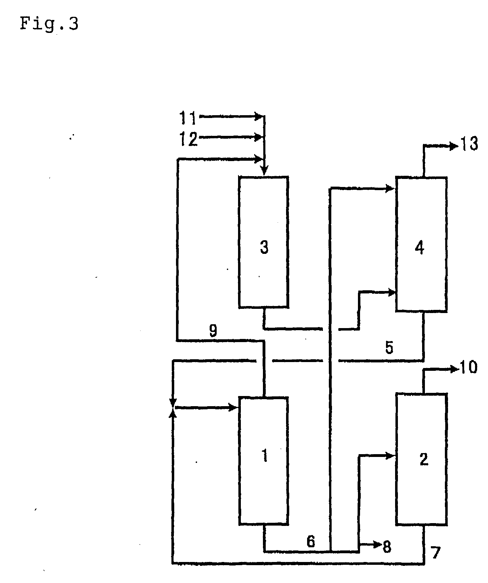

Fig. 3 shows an example of a process flow in which the present invention is applied to a method for producing chlorine by oxidizing hydrogen chloride with oxygen.

In this process flow, hydrogen chloride **11** and oxygen **12** are fed to an oxidation reactor **3** of hydrogen chloride, an obtained reaction mixture is fed to an absorption column **4** of hydrogen chloride, and unreacted hydrogen chloride and product water in the reaction mixture are absorbed using a part of an aqueous hydrogen chloride solution **6** discharged from the bottom of the hydrogen chloride distillation column. Chlorine and oxygen **13** are recovered from the top of the absorption column **4** of hydrogen chloride. An aqueous hydrogen chloride solution **5** from the absorption column **4** is fed to the hydrogen chloride distillation column **1** with an aqueous hydrogen chloride solution **7** discharged from the bottom of the dehydration column **2**. Hydrogen chloride **9** is recovered from the top of the hydrogen chloride distillation column **1**, and fed to the oxidation reactor **3** of hydrogen chloride. A part of the aqueous hydrogen chloride solution **6** discharged from the bottom of the hydrogen chloride distillation column **1** is fed to the dehydration column, water **10** is recovery from the top of the dehydration column **2**, and an aqueous hydrogen chloride solution **7** discharged from the bottom of the dehydration column **2** is recycled to the hydrogen chloride distillation column **1**. A part **8** of the aqueous hydrogen chloride solution **6** discharged from the bottom of the hydrogen chloride distillation column **1** may be removed from the present system.

Under temperatures at which industrially sufficient reaction speed is obtained in a reaction for producing chlorine and water from hydrogen chloride and oxygen, it is difficult to convert hydrogen chloride completely owing to restriction of chemical equilibrium. Therefore, in a method for producing chlorine by oxidation of hydrogen chloride, a way to separate reaction product water from unreacted hydrogen chloride and to remove the water out of the system is an important subject, and if the present invention is applied, the reaction product water can be removed efficiently out of the system without concurrent loss of hydrogen chloride. Further, by adopting a method in which the operation pressure in the hydrogen chloride distillation column is set higher than the pressure of the oxidation reactor of hydrogen chloride, an aqueous hydrogen chloride solution obtained in the absorption column of hydrogen chloride is fed to the hydrogen chloride distillation column using a pump and the like, hydrogen chloride gas recovered from the hydrogen chloride distillation column can be fed to the oxidation reactor of hydrogen chloride easily without using a more expensive compressor as compared with a pump for liquid.

As described above, according to the present invention, there can be provide a method for separating hydrogen chloride and water from an aqueous hydrogen chloride solution of which separation into components is difficult due to formation of an azeotropic mixture of the components, the method being efficiently conducted without adding a third component.

### Examples

The present invention will be further illustrated in detail with the following example, but the invention is not limited to the example.

An aqueous hydrogen chloride solution composed of 35% by weight of hydrogen chloride and 65% by weight of water having a temperature of 25°C is continuously fed at a speed of 100.0 g per hour under an operation pressure of 2.5×10⁵ Pa(2.5 bar) to the top of a hydrogen chloride distillation column equipped with a reboiler at the bottom and a condenser at the top and having 10 theoretical stages excepting the reboiler and condenser. A gas discharged from the top of the column is cooled to 25°C, the condensed liquid is returned to the top of the column, and an uncondensed gas is recovered from the system via a pressure hold valve. Further, liquid is discharged from the bottom so that liquid surface becomes constant. When the heating amount by the reboiler is increased, the concentration of hydrogen chloride in the bottom liquid decreases gradually to that of an azeotropic composition of hydrogen chloride and water under the bottom pressure, and if the heating amount by the reboiler is controlled so that the concentration of hydrogen chloride in liquid discharged from the bottom is 19% by weight and if operation is stabilized under this condition, an uncondensed gas composed of 99.94% by weight of hydrogen chloride and 0.06% by weight of water and having a temperature of 25°C is obtained from the condenser at a rate of 19.8 g per hour, and an aqueous hydrogen chloride solution composed of 19% by weight of hydrogen chloride and 81% by weight of water is obtained from the bottom of the column at a rate of 80.2 g per hour.

Next, the aqueous hydrogen chloride solution discharged from the bottom of the hydrogen chloride distillation column which is cooled 50°C is continuously fed at a speed of 80.2 g per hour under an operation pressure of 0.1×10⁵ Pa(0.1 bar) to a position corresponding to site between the fourth theoretical stage and the fifth theoretical stage from the upper side of a dehydration column equipped with a reboiler at the bottom of the column and a condenser at the top of the column and having 10 theoretical stages excepting the reboiler and condenser. A gas discharged from the top of the column is all condensed by the condenser, and distributed to an effluent discharged from the system together with reflux liquid returning to the column. The aqueous hydrogen chloride solution discharged from the hydrogen chloride distillation column has a composition richer in water than an azeotropic composition of hydrogen chloride and water under the operation pressure of the dehydration column, and water is concentrated gradually toward the top of the column. When the heating amount by the reboiler is increased, the concentration of hydrogen chloride at the bottom of the column increases gradually toward that of an azeotropic composition under the bottom pressure. If the heating amount by the reboiler is controlled so that the concentration of hydrogen chloride in the aqueous hydrogen chloride solution discharged from the bottom of the column is 22% by weight and if operation is stabilized while maintaining the reflux ratio of liquid obtained from the condenser at the top of the column at 0.3, water is obtained at a rate of 10.9 g per hour from the top of the column, and an aqueous hydrogen chloride solution composed of 22% by weight of hydrogen chloride and 78% by weight of water is discharged from the bottom of the column at a rate of 69.3 g per hour.

Further, an aqueous hydrogen chloride solution discharged from the bottom of the dehydration column is compressed with a pump and fed to the top of the hydrogen chloride distillation column in addition to an aqueous hydrogen chloride solution previously fed to the hydrogen chloride distillation column at a rate of 100.0 g per hour. Regarding the operation condition of the hydrogen chloride distillation column, cooling by the condenser and heating by the reboiler are controlled so that the temperature of an uncondensed gas and the concentration of hydrogen chloride in the aqueous hydrogen chloride solution discharged from the bottom of the hydrogen chloride distillation column are kept at 25°C and 19% by weight, respectively. The aqueous hydrogen chloride solution discharged from the bottom of the hydrogen chloride distillation column is, in the same manner as described above, cooled to 50°C before it is fed to a position between the fourth stage and the fifth stage from the upper side of the dehydration column, and heating by the reboiler is controlled so that the concentration of hydrogen chloride of the aqueous hydrogen chloride solution discharged from the bottom of the dehydration column is maintained at 22% by weight, and the reflux ratio of liquid obtained from the condenser at the top is kept at 0.3. If operation is continued and both of the hydrogen chloride distillation column and the dehydration column reach the stationary state, an uncondensed gas composed of 99.94% by weight of hydrogen chloride and 0.06% by weight of water is obtained from the condenser of the hydrogen chloride distillation column at a rate of 35.0 g per hour and water is obtained from the top of the dehydration column at a rate of 65. 0 g per hour.

In this operation, an aqueous hydrogen chloride solution composed of 35% by weight of hydrogen chloride and 65% by weight of water is fed at a rate of 100.0 g per hour from the outside, and this is separated into 35.0 g of a gas mainly composed of hydrogen chloride and 65.0 g of water, and these components are discharged from the system.

## Claims

1. A method for separating hydrogen chloride and water from an aqueous hydrogen chloride solution comprising the steps of:
providing a hydrogen chloride distillation column and a dehydration column;
operating the hydrogen chloride distillation column such that the pressure at the top of the hydrogen chloride distillation column is higher than the pressure at the top of the dehydration column;
feeding an aqueous hydrogen chloride solution having a composition richer in hydrogen chloride than an azeotropic composition of hydrogen chloride and water when under a pressure equal to the pressure at the top of the hydrogen chloride distillation column, to the hydrogen chloride distillation column;
distilling the aqueous hydrogen chloride solution fed to the hydrogen chloride distillation column;
recovering hydrogen chloride from the top of the hydrogen chloride distillation column;
feeding an aqueous hydrogen chloride solution having a composition richer in water than an azeotropic composition of hydrogen chloride and water when under a pressure equal to the pressure at the top of the dehydration column, to the dehydration column;
distilling the aqueous hydrogen chloride solution fed to the dehydration column;
recovering water from the top of the dehydration column;
feeding a part or all of the liquid recovered from the bottom of the hydrogen chloride distillation column to the dehydration column; and
feeding a part or all of the liquid recovered from the bottom of the dehydration column to the hydrogen chloride distillation column.

2. A method according to claim 1, wherein the aqueous hydrogen chloride solution fed to the hydrogen chloride distillation column contains a raw aqueous hydrogen chloride solution.

3. A method according to claim 2, wherein the raw aqueous hydrogen chloride solution is an aqueous hydrogen chloride solution having a composition richer in hydrogen chloride than an azeotropic composition of hydrogen chloride and water when under a pressure equal to the pressure at the top of the dehydration column.

4. A method according to any one of the preceding claims, wherein the aqueous hydrogen chloride solution fed to the dehydration column contains a raw aqueous hydrogen chloride solution.

5. A method according to claim 4, wherein the raw aqueous hydrogen chloride solution is an aqueous hydrogen chloride solution having a composition richer in water than an azeotropic composition of hydrogen chloride and water when under a pressure equal to the pressure at the top of the hydrogen chloride distillation column.

6. A method according to any one of the preceding claims, wherein the pressure at the top of the hydrogen chloride distillation column is from 1 X 10⁵ to 5 X 10⁵ Pa.

7. A method according to any one of the preceding claims, wherein the pressure at the top of the dehydration column is from 0.05 X 10⁵ to 0.5 X 10⁵ Pa.

8. A method according to claim 6, wherein the temperature of the bottom liquid of the hydrogen chloride distillation column is from 100 to 160°C and the concentration of hydrogen chloride in the aqueous hydrogen chloride solution fed to the hydrogen chloride distillation column is from 25 to 40% by weight.

9. A method according to claim 7, wherein the temperature of the bottom liquid of the dehydration column is from 50 to 90°C and the concentration of hydrogen chloride in the aqueous hydrogen chloride solution fed to the dehydration column is from 15 to 21% by weight.

10. A method according to any one of the preceding claims, wherein the aqueous hydrogen chloride solution discharged from the bottom of the hydrogen chloride distillation column is an aqueous hydrogen chloride solution having a composition richer in water than an azeotropic composition of hydrogen chloride and water when under a pressure equal to the pressure at the top of the dehydration column.

11. A method according to any one of the preceding claims, wherein the aqueous hydrogen chloride solution discharged from the bottom of the dehydration column is an aqueous hydrogen chloride solution having a composition richer in hydrogen chloride than an azeotropic composition of hydrogen chloride and water when under a pressure equal to the pressure at the top of the hydrogen chloride distillation column.

12. A method according to any one of claims 2 to 5, wherein the raw aqueous hydrogen chloride solution contains all or a part of unreacted hydrogen chloride and reaction product water in a reaction mixture obtained by oxidation of hydrogen chloride with oxygen to chlorine and water.

13. A method according to any one of the preceding claims, wherein hydrogen chloride recovered from the top of the hydrogen chloride distillation column is fed to an oxidation reactor of hydrogen chloride with oxygen.

14. A method according to any one of the preceding claims, wherein the aqueous hydrogen chloride solution fed to the hydrogen chloride distillation column is fed to the column after changing the solution to a gas or a mixture of gas and liquid.

15. A method according to any one of the preceding claims, wherein the aqueous hydrogen chloride solution fed to the dehydration column is fed to the column after changing the solution to a gas or a mixture of gas and liquid.
